# EUROPÄISCHE PATENTSCHRIFT

(11) **EP 1 454 875 B1**
(45) Veröffentlichungstag und Bekanntmachung des Hinweises auf die Patenterteilung: **21.04.2010**
(21) Anmeldenummer: 04003365.6
(22) Anmeldetag: 16.02.2004
(51) Int. Cl.: C01B 3/00, F17C 11/00

(54) **Wasserstoffspeicher und Verfahren zu seiner Herstellung**
Apparatus for hydrogen storage and process for its production
Dispositif de stockage d'hydrogène et procéde de sa production

(30) Priorität: 07.03.2003 DE 10309977
(43) Veröffentlichungstag der Anmeldung: 08.09.2004
(73) Patentinhaber: Howaldtswerke-Deutsche Werft GmbH, 24143 Kiel (DE)
(72) Erfinder: Pommer, Hans, Dipl.-Ing., 24360 Barkelsby (DE); Sattler, Gunter, Dipl.-Ing., 23568 Lübeck (DE); Benthien, Udo, Dipl.-Ing., 23562 Lübeck (DE)
(74) Vertreter: Vollmann, Heiko

(56) Entgegenhaltungen:
- WO-A-89/02661
- DE-A1- 3 502 311
- DE-A1- 4 201 131
- GB-A- 2 148 477
- NASAKO K ET AL: "Stress on a reaction vessel by the swelling of a hydrogen absorbing alloy" JOURNAL OF ALLOYS AND COMPOUNDS, ELSEVIER SEQUOIA, LAUSANNE, CH, Bd. 264, Nr. 1-2, 9. Januar 1998 (1998-01-09), Seiten 271-276, XP004125077 ISSN: 0925-8388

## Beschreibung

Die Erfindung betrifft einen Wasserstoffspeicher in Form eines Metallhydridspeichers sowie ein Verfahren zu seiner Herstellung.

Aus DE 35 02 311 A1 ist ein Wasserstoffspeicher bekannt. Dieser besteht aus einem für Wasserstoff druckdichten, typischerweise aus Stahl gefertigten Behälter, der im Wesentlichen zylindrische Form hat und längs seiner Zylinderachse mit einem Befüll- und Entnahmerohr versehen ist, das von für Wasserstoffgas durchlässigen Kassetten umgeben ist, in denen Metallhydrid angeordnet ist, in dessen Gitterstruktur der Wasserstoff in an sich bekannter Weise einlagerbar ist. Das Metallhydrid ist bei dem bekannten Speicher in Form eines Granulats eingebracht. Alternativ ist es bekannt, das Metallhydrid in Pulverform oder in Form von Pellets einzubringen.

Da sich das Metallhydrid beim Aufnehmen von Wasserstoff aufgrund der Einlagerung der Wasserstoffatome in das Kristallgitter erheblich ausdehnt, sind die Kassetten so ausgestaltet, dass sie einen Freiraum innerhalb des Behälters belassen, der bei Aufnahme von Wasserstoff durch radiale Dehnung des Metallhydrids dann ausgefüllt wird. Dies hat zwar den Vorteil, dass die Gefahr des Berstens des Behälters oder einer Beschädigung durch unzulässig plastische Verformung zuverlässig vermieden wird, jedoch den Nachteil, dass der Füllgrad vergleichsweise gering ist, so dass auch die mögliche Wasserstoffaufnahme nicht die physikalisch möglichen Kapazitäten auch nur annährend ausfüllt.

Aus DE 42 01 131 A1 ist ein vergleichbarer Metallhydridbehälter bekannt, der aus einem äußeren druckfesten und gasdichten Behälter sowie einem inneren aus Aluminium bestehenden gasdurchlässigen Behälter besteht, in dem das Metallhydrid eingelagert ist. Zwischen dem inneren und dem äußeren Behälter sind Freiräume gebildet, so dass sich der innere Behälter beim Beladen mit Wasserstoff plastisch verformen kann ohne den Außenbehälter zu beschädigen.

Aus GB 2 148 477 A ist eine vergleichbare Anordnung bekannt, bei der der Innenbehälter stirnseitig verschiebbare Deckel aufweist, so dass sich das Metallhydrid durch Ausweichen in axialer Richtung dehnen kann ohne den äußeren Behälter zu zerstören.

Darüber hinaus ist die Herstellung solcher bekannter Wasserstoffspeicher sehr aufwändig. Das Metallhydrid, wird üblicherweise unter Vakuum erschmolzen, wobei die Gussblöcke dann in kostenaufwändiger Weise zerkleinert und pulverisiert und gegebenenfalls wieder zusammengepresst werden. Diese Bearbeitungsverfahren sind aufgrund des harten und spröden Werkstoffs energie- und werkzeugintensiv.

Vor diesem Hintergrund liegt der Erfindung die Aufgabe zugrunde, einen Metallhydridwasserstoffspeicher so auszubilden, dass seine Wasserstoffaufnahmekapazität erhöht wird und darüber hinaus ein Verfahren zu schaffen, mit dem auf einfache und kostengünstige Weise ein solcher Wasserstoffspeicher hergestellt werden kann.

Der vorrichtungsmäßige Teil der Aufgabe wird durch die in Anspruch 1 angegebenen Merkmale gelöst, Anspruch 4 kennzeichnet das erfindungsgemäße Verfahren zur Herstellung eines erfindungsgemäßen Wasserstoffspeichers. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, den Füllgrad des Behälters weiter zu erhöhen, und zwar soweit, dass beim folgenden Befüllen mit Wasserstoff eine plastische Verformung des äußeren Behälters erfolgt. Dabei sind jedoch der Behälter einerseits und der Füllgrad andererseits so aufeinander abgestimmt, dass die plastische Verformung in einem Bereich liegt, welcher die Funktion des Behälters nicht beeinträchtigt. Das heißt, dass der Behälter konstruktiv so ausgelegt ist, dass er bei der zu erwartenden Ausdehnung zwar eine plastische Verformung zulässt, diese jedoch die für die Sicherheit erforderliche notwendige Festigkeit des Behälters nicht beeinflusst. Die Abstimmung ist daher so, dass die Dehnung des Behälters zuverlässig auf ein tolerierbares Maß begrenzt ist. Im Gegensatz zu einem Gasdruck (für den Behälter üblicherweise ausgelegt werden) stellt sich in diesem Fall ein Gleichgewicht zwischen dem Ausdehnungsdruck und dem Mantelgegendruck schon bei kleinen Verformungen ein, weshalb die Gefahr einer unzulässigen örtlichen Überdehnung bei entsprechend ausgelegten Füllgrad nicht gegeben ist. Um eine gleichmäßige Verteilung und somit auch Ausdehnung des Metallhydrids beim Einlagern von Wasserstoff sicherzustellen ist es gemäß der Erfindung vorgesehen, Metallhydrid in für Wasserstoff durchlässig konstruierten Kassetten, beispielsweise aus Aluminium oder einer anderen Metalllegierung zu lagern. Hierdurch kann insbesondere eine örtliche Drucküberhöhung durch Dehnung verhindert werden, da eine Materialanhäufung von Metallhydrid an bestimmten Stellen des Behälters weitgehend verhindert wird.

Um einen hohen Füllgrad zu erreichen, ist gemäß der Erfindung vorgesehen, dass Metallhydrid nicht, wie sonst üblich, als Pulver gemahlen, granuliert oder pelletiert in den (noch offenen) Stahlbehälter, der den äußeren Behälter bildet, einzufüllen, sondern in Form von Metallhydridgussblöcken. Zweckmäßigerweise werden auch die Metallhydridgussblöcke in für Wasserstoff durchlässig konstruierten Kassetten angeordnet, da sie nach dem Aktivieren, d. h. nach dem erstmaligen Beladen mit Wasserstoff zu Pulver zerfallen und dann ebenfalls dafür Sorge zu tragen ist, dass keine örtlich erhöhten Anhäufungen von Metallhydridpulver auftreten.

Durch den Einsatz von Metallhydridgussblöcken kann wesentlich mehr Metallhydrid in den Behälter eingebracht werden als dies beim Stand der Technik der Fall ist, bei dem zerkleinertes Material Verwendung findet. Bei den hier typischerweise eingesetzten Niedertemperaturmetallhydriden weist das in einen Block gegossenen Material typischerweise eine Dichte von 6 g/cm³ auf. Wird dieses Material granuliert oder pulverisiert, so kann selbst dann, wenn dieses Material wieder verpresst wird nur eine Dichte kleiner 4 g/cm³ nach Aktivierung erreicht werden. Beim Einsatz von Metallhydridgussblöcken gemäß der Erfindung hingegen weist das im Behälter befindliche aktivierte Metallhydrid eine Dichte von mehr als 4 g/cm³ auf und kann somit eine entsprechend höhere Menge an Wasserstoff binden.

Es hat sich gezeigt, dass das Zerkleinern des Metallhydridmaterials vor dem Befüllen des Behälters nicht erforderlich, ja sogar nachteilig ist. Nachteilig deshalb, weil die gewünschte enge Packungsdichte aufgrund der sich im zerkleinerten Zustand ergebenden nicht nutzbaren Zwischenräume nicht mehr erzielt werden kann. Ein weiterer wesentlicher Nachteil ist darin zu sehen, dass die Zerkleinerung eines Metallhydridgussblocks wie eingangs dargelegt, kostenintensiv ist.

Das erfindungsgemäße Verfahren hingegen vermeidet diese Nachteile, indem mindestens ein, vorzugsweise jedoch eine Vielzahl von (bevorzugt in Kassetten angeordneten) Metallhydridblöcken Stahlbehälter möglichst eng aneinander liegend eingegliedert werden, wonach der Stahlbehälter zu einem druckdichten Behälter geschlossen und danach evakuiert wird. Gemäß der Erfindung wird der Stahlbehälter dann bei Raumtemperatur und einem mittleren Druck mit Wasserstoff befüllt, d. h. aktiviert. Dabei gelangt Wasserstoff durch die im Guss stets vorhandenen Spannungsrisse in den Gussblock und aktiviert das Material. Durch die Dehnung des Materials beim Beladen mit Wasserstoff bricht der Gussblock völlig auseinander und wird pulverisiert. Das dort entstehende pulverisierte Material kann sich jedoch nicht beliebig ausdehnen, da der zur Verfügung stehende Raum durch den äußeren Behälter begrenzt ist. Es zerfällt daher nicht wie Schüttgut sondern bleibt zumindest teilweise in den Festkörper ähnlichen Strukturen erhalten, was zu einer wesentlich höheren Packungsdichtung führt. Darüber hinaus wird die Volumenausdehnung des Metallhydrids, die beim Beladen mit Wasserstoff zwangsläufig entsteht, gezielt radial nach außen auf die Behälterwandung geleitet, die durch den Materialdruck im tolerierbaren Maße plastisch verformt wird. Durch die höhere Packungsdichte hat das Metallhydrid nicht mehr die Möglichkeit, sich zu verlagern. Somit können auch keine lokalen Anhäufungen von Metallhydrid und damit die Gefahr von lokalen und unkontrollierten Verformungen am Behälter auftreten.

Die Packungsdichte kann darüber hinaus noch für Einsatzzwecke erhöht werden, wenn die Anzahl der zulässigen Lade-/Endladezyklen verringert wird. Dies ist insbesondere für den Einsatz in Unterseebooten von Vorteil, bei denen die Kapazität des Wasserstoffsspeichers von ausschlaggebender Bedeutung ist, wohingegen die Zahl der Lade-/Endladezyklen einsatzbedingt begrenzt ist. Hier kann also durch weitere Erhöhung der Packungsdichte die Kapazität des Speichers noch weiter gesteigert werden.

Bevorzugt werden gemäß der Erfindung die Metallhydridgussblöcke im Wesentlichen in unbearbeiteter Form in den Stahlbehälter eingesetzt, und zwar vorzugsweise jeweils unter Zwischenschaltung einer für Wasserstoff durchlässig konstruierten Kassette. Hierdurch können weitere Bearbeitungen des Gussblocks völlig entfallen. Es ergeben sich dann allerdings gewisse Freiräume, die erforderlich sind, damit der Metallhydridgussblock mit Spiel in die Kassette eingelegt werden kann, also nicht aufgrund von Fertigungstoleranzen verkanten oder verklemmen kann. Diese Freiräume werden beim erstmaligen Aktivieren, d. h. Beladen des Speichers mit Wasserstoff, ohnehin durch die Materialdehnung ausgeglichen und sind daher so dimensioniert, dass möglichst geringe Fertigungsgenauigkeiten einzuhalten sind.

Gemäß der Erfindung erfolgt die Aktivierung des Metallhydrids innerhalb des Behälters ohne Heizen und Spülen. Die Erfindung ermöglicht somit eine erhebliche Verfahrensvereinfachung. Das erstmalige Befüllen mit Wasserstoff erfolgt vorzugsweise bei Raumtemperatur, also einer Temperatur zwischen 5 und 45 °. Der Fülldruck sollte zwischen 10 und 65 bar betragen, wobei die untere Grenze erforderlich ist, um die Aktivierung zu starten und die obere Grenze um eine vollständige Füllung des Speichers zu erzielen.

Die für Wasserstoff durchlässig konstruierten Metallkassetten, die jeweils einen Metallhydridblock, vorzugsweise einen weitgehend unbearbeiteten Gussblock aufnehmen, können einerseits als Transportbehälter dienen und ermöglichen andererseits die gleichmäßige Materialverteilung innerhalb des Stahlbehälters, indem diese ringförmigen Kassetten in dem Raum zwischen Befüll- und Entnahmerohr sowie der Stahlbehälterwandung gestapelt werden. Dabei ist der dem späteren äußeren Behälter bildende Stahlbehälter so dimensioniert, dass er nahezu vollständig mit in Kassetten eingliederten Metallhydridblocken gefüllt werden kann. Verschlossen wird der Stahlbehälter nach dem Befüllen mittels eines anzuschweißenden Deckels, so dass dann der mit Metallhydrid gefüllte druckdichte Behälter gebildet ist. Um sicherzustellen, dass das zu Pulver zerfallende Metallhydrid innerhalb der jeweiligen Kassette verbleibt, wird jede Kassette vor dem Einführen in den Stahlbehälter mit einem Deckel abgeschlossen, der vorzugsweise mit der Kassette verschweißt ist. Zweckmäßigerweise wird der Deckel dabei durch den Boden der nächst darüber befindlichen Kassette gebildet, so dass lediglich die oberste Kassette besonders auszubilden ist.

Wenn dann sämtliche Kassetten miteinander verschweißt sind, ergibt sich ein im Wesentlichen zylindrischer Körper, der den Innenraum des Stahlbehälters mit geringem Spiel ausfüllt und lediglich in der Mitte eine zentrale Ausnehmung für das Befüll- und Entnahmerohr aufweist.

Das Verschweißen der Kassetten miteinander ist insbesondere auch im Hinblick auf statische Anforderungen vor dem Einführen in den Stahlbehälter von Vorteil, da auf diese Weise, insbesondere bei hohen Stapeln, die Eigenstabilität des Stapels erhöht wird, also sichergestellt wird, dass die vergleichsweise labilen Kassetten durch den Druck der darüber liegenden Kassetten nicht verformt werden.

Die innerhalb des Behälters angeordneten Kassetten müssen im ausreichenden Maße für Wasserstoff durchlässig sein, damit eine zügiges Beund Entladen über das zentrale Befüll- und Entnahmerohr möglich ist. Hierfür reicht die beispielsweise bei Aluminium vorhandene ,Materialdurchlässigkeit in der Regel nicht aus, so dass gegebenenfalls an geeigneter Stelle auch noch entsprechende Ausnehmungen vorzusehen sind, beispielsweise an der zum Be- und Entladerohr gerichteten Seite der Kassetten. Gegebenenfalls können solche Ausbildungen auch zwischen übereinander angeordneten Kassetten, z. B. an der Innenseite gebildet sein. Es ist also gegebenenfalls durch Materialwahl und/oder konstruktiv dafür Sorge zu tragen, dass eine ausreichende Wasserstoffdurchlässigkeit der Kassetten gegeben ist.

Die Anwendungsgebiete für den erfindungsgemäßen Wasserstoffspeicher sind nicht begrenzt. Besonders vorteilhaft kann ein solcher Wasserstoffspeicher bei U-Booten eingesetzt werden, da einerseits die bei Außenlagerung erforderliche hohe Druckfestigkeit durch den hohen Füllgrad unterstützt wird und andererseits insbesondere die bei U-Booten erforderliche im Wesentlichen horizontale oder beliebige Lagerung möglich ist, wie sie während des Fahrbetriebs zu erwarten ist. Durch die hohe Packungsdichte ist sichergestellt, dass unabhängig von der Lagerung des Wasserstoffspeichers keine bzw. tolerierbare örtliche Verlagerung des Metallhydrids innerhalb des Speichers zu erwarten ist. Durch die hohe Packungsdichtung wird darüber hinaus eine hohe Stoßbelastbarkeit des Behälters gewährleistet, was insbesondere bei militärischen Unterseebooten von Vorteil ist. Darüber hinaus kann der erfindungsgemäße Wasserstoffspeicher vorteilhaft auch auf Überwasserschiffen eingesetzt werden.

Die Erfindung ist nachfolgend anhand eines in der Zeichnung dargestellten Ausführungsbeispiels näher erläutert. Es zeigen:
- Fig. 1: in stark vereinfachter schematischer Darstellung einen Längsschnitt durch einen Wasserstoffspeicher gemäß der Erfindung vor dessen Aktivierung,
- Fig. 2: in stark schematisierter Darstellung einen Behälter vor (a) und nach (b) dem Aktivieren und
- Fig. 3: einen Schnitt durch den Behälter gemäß Fig. 2 längs der Linie III - III.

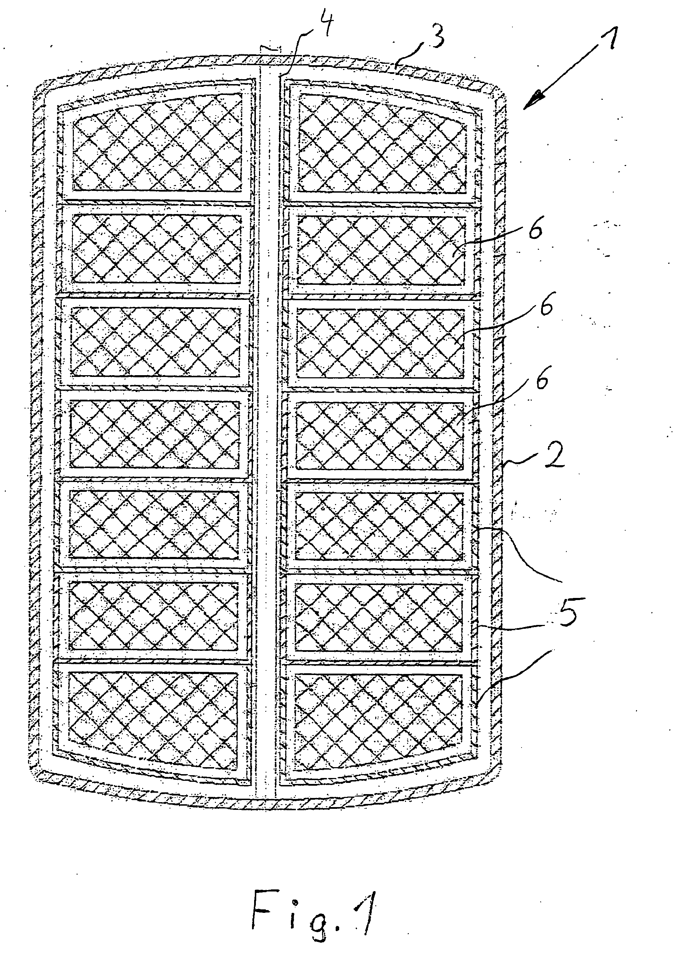

Der in Fig. 1 dargestellte Wasserstoffspeicher besteht aus einem aus Stahl hergestellten für Wasserstoff druckdichten Behälter 1, der aus einem zylindrischen, nach einer Seite (oben) offenen Stahlbehälter 2 gebildet ist, der durch einen mit dem Stahlbehälter 2 verschweißten Deckel 3 zum Behälter 1 ausgebildet ist. Innerhalb des Behälters 1 ist koaxial zur Behälterachse ein Befüll- und Entnahmerohr 4 angeordnet, das in an sich bekannter Weise aus gesintertem Metall gebildet ist, so dass es für Wasserstoff durchlässig, jedoch für Feststoffe undurchlässig ist. Das Befüll- und Entnahmerohr 4 ist am Deckel 3 des Behälters 1 zu einem (nicht weiter dargestellten Rohranschluss) hinausgeführt.

Innerhalb des Behälters 1 sind in diesem Ausführungsbeispiel sieben Kassetten 5 aus für Wasserstoff durchlässig konstruierten, gut wärmeleitenden Werkstoff, hier Aluminium gebildet, die mit Spiel innerhalb des Behälters 1 zwischen Befüll- und Entnahmerohr 4 und der Innenwandung angeordnet sind. Sie sind von oben in den noch offenen Stahlbehälter 2 eingeführt. Die Kassetten 5 sind jeweils mit einem Gussblock aus Niedertemperaturmetallhydrid gefüllt. Der Gussblock 6 sitzt ebenfalls mit Spiel in der jeweiligen Kassette 5 derart, dass der Gussblock, der üblicherweise als Vakuumschmelze erstellt wird, nach dem Abkühlen ohne weitere Bearbeitung in die Kassette 5 eingelegt werden kann.

Die Kassetten 5 werden als nach oben offen, hohlringförmige Behältnisse gebaut, in welche ein Gussblock 6 von oben eingelegt wird. Danach wird die Kassette 5 an der Oberseite durch einen Deckel abgeschlossen, der am Umfang mit der Kassette 5 verschweißt ist. Bei den Kassetten 5, die nach oben durch eine weitere Kassette 5 abgedeckt werden, bildet der Boden der oberen Kassette den Deckel der darunter liegenden. Die Kassetten 5 sind also miteinander verschweißt. Lediglich für die oberste Kassette ist ein gesonderter Deckel vorzusehen. Auf diese Weise entsteht ein im Wesentlichen zylindrischer Körper mit einer zentralen Ausnehmung, der von oben in den Stahlbehälter 2 eingeführt werden kann und der sämtliche Kassetten 5 mit den darin befindlichen Gussblöcken 6 umfasst.

Nachdem der so befüllte Stahlbehälter 2 durch Verschweißen des Deckels 3 abgeschlossen und zum druckdichten Behälter 1 ausgebildet ist, kann der so gebildete Wasserstoffspeicher aktiviert werden.

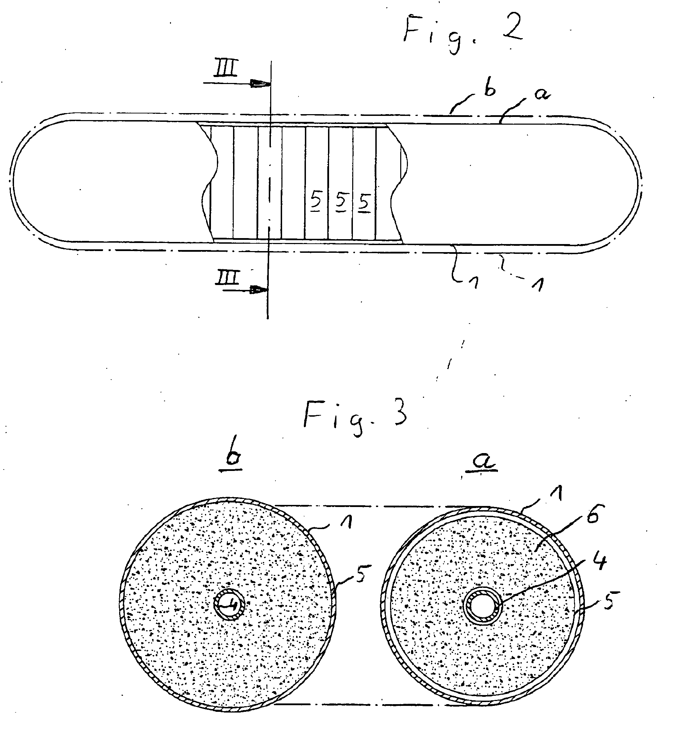

Das Aktivieren des Wasserstoffspeichers erfolgt bei einer Raumtemperatur mit einem Druck von zunächst mindestens 10 bar. Dabei gelangt der Wasserstoff durch das Befüll- und Entnahmerohr 4 in die Kassetten 5 zu den Gussblöcken 6. Über die durch Abkühlung in den Gussblöcken 6 vorhandenen Spannungsrisse gelangt der Wasserstoff in das Innere dieser Blöcke, die durch dieses Beladen mit Wasserstoff vollständig zu Pulver zerfallen. Da die Gussblöcke 6 in räumlich abgeschlossenen Kassetten 5 und diese wiederum im räumlich abgeschlossenen Behälter 1 angeordnet sind, erfolgt die beim Aufladen mit Wasserstoff übliche Dehnung zunächst unter Überwindung der innerhalb des Behälters 1 toleranzbedingt gebildeten Freiräume. Wenn schließlich die Kassetten 5 vollständig mit Metallhydridpulver gefüllt sind und dieses sich weiter ausdehnt, legen sich die Kassetten 5 innen an das Befüll- und Entnahmerohr 4 und außen an die Innenseite des Behälters 1. Soweit es die zum Entnahmerohr 4 gerichteten Kräfte angeht, kompensieren diese sich weitgehend, so dass im Wesentlichen eine Kraft radial nach Außen wirkt, so dass sich beim weiteren Dehnen des Metallhydrids schließlich der Behälter 1 in seinem zylindrischen Außenumfang plastisch verformt. Durch die Verformung über die Elastizitätsgrenze hinaus stellt sich ein Gleichgewicht zwischen dem Ausdehnungsdruck und dem Mantelgegendruck schon bei kleinen Verformungen her. Da das Metallhydridpulver durch die Kassettenbauweise örtlich gebunden innerhalb des Behälters 1 angeordnet ist, erfolgt die Dehnung gleichmäßig über den gesamten Außenumfang, ohne dass die Gefahr einer örtlichen Überdehnung besteht. Anhand der Fig. 2 und 3 ist dieser Dehnvorgang noch im Einzelnen dargestellt, wobei mit a der Zustand vor dem Aktivieren und mit b der Zustand nach dem Aktivieren gekennzeichnet ist.

Um den so gebildeten Wasserstoffspeicher vollständig zu füllen ist dieser mit dem Ladedruck zu beaufschlagen. Nach dem ersten Füllen des so gebildeten Wasserstoffspeichers kann dieser unmittelbar seiner Bestimmung zugeführt werden, eine Aktivierung, wie sie beim Stand der Technik durch Heizen und Spülen erforderlich ist, kann vollständig entfallen.

### Bezugszeichenliste

- 1 -: Behälter
- 2 -: Stahlbehälter
- 3 -: Deckel
- 4 -: Befüll- und Entnahmerohr
- 5 -: Kassetten
- 6 -: Gussblock
- a -: vor dem Befüllen mit Wasserstoff
- b -: nach dem Befüllen mit Wasserstoff

## Patentansprüche

1. Wasserstoffspeicher bestehend aus einem mit Metallhydrid (6) gefüllten druckdichten Behälter (1), mit einem Befüll- und Entnahmerohr (4), bei dem der Behälter (1) mit in für Wasserstoff durchlässig konstruierten Kassetten (5) angeordnetem Metallhydrid (6) gefüllt ist, und bei dem der Behälter (1) und seine Befüllung so dimensioniert und ausgelegt sind, dass der Behälter (1) durch Dehnung des Metallhydrids (6) beim Befüllen plastisch verformt wird.

2. Wasserstoffspeicher nach Anspruch 1, bei dem die Kassetten (5) mit Metallhydridgussblöcken (6) gefüllt sind, die durch das Beladen mit Wasserstoff vollständig zu Pulver zerfallen.

3. Wasserstoffspeicher nach einem der vorhergehenden Ansprüche, bei dem der Behälter (1) in aktiviertem Zustand mit Metallhydrid (6) einer Dichte von mehr als 4 g/cm³.

4. Verwendung eines Wasserstoffspeichers nach einem der vorhergehenden Ansprüche für ein Wasserfahrzeug, insbesondere ein Unterseeboot.

5. Verfahren zum Herstellen eines Wasserstoffspeichers, bei dem ein Stahlbehälter (2) mit mindestens einem Metallhydridblock (6) gefüllt und anschließend zu einem Behälter (1) geschlossen, danach evakuiert und dann mit Wasserstoff befüllt wird.

6. Verfahren nach Anspruch 5, bei dem die Metallhydridblöcke (6) als im Wesentlichen unbearbeitete Gussblöcke (6) in den Stahlbehälter (2) ggf. unter Zwischenschaltung einer für Wasserstoff durchlässigen Kassette (5) eingesetzt werden.

7. Verfahren nach einem der vorhergehenden Ansprüche, bei dem die Aktivierung des Metallhydrids (6) ohne Heizen und Spülen erfolgt.

8. Verfahren nach einem der vorhergehenden Ansprüche, bei dem die Aktivierung des Metallhydrids durch Befüllen mit Wasserstoff mit einer Temperatur zwischen 5 °C und 45 °C und bei einem Druck zwischen 10 bar und 65 bar erfolgt.

9. Verfahren nach einem der vorhergehenden Ansprüche, bei dem ein Metallhydridblock (6) in einer für Wasserstoff durchlässig konstruierten Metallkassette (5) angeordnet ist und mehrere derart gefüllter Kassetten in den Stahlbehälter (2) eingegliedert werden.

10. Verfahren nach einem der vorhergehenden Ansprüche, bei dem der Stahlbehälter (2) im Wesentlichen vollständig mit Metallhydridblöcken (6) und ggf. vorhandenen Kassetten (5) gefüllt wird.

11. Verfahren nach einem der vorhergehenden Ansprüche, bei dem jede Kassette (5) vor dem Einführen in den Stahlbehälter (2) durch einen vorzugsweise durch den Boden der nächsten Kassette (5) gebildeten Deckel verschlossen wird.

12. Verfahren nach einem der vorhergehenden Ansprüche, bei dem jede Kassette (5) durch Schweißen verschlossen wird.

13. Verfahren nach einem der vorhergehenden Ansprüche, bei dem die Kassetten (5) vor dem Einführen in den Stahlbehälter (2) miteinander verschweißt werden.

## Claims

1. A hydrogen storage device consisting of a pressure-tight container (1) filled with metal hydride (6), with a filling and discharge tube (4), with which the container (1) is filled with metal hydride (6) arranged in cassettes (5) designed permeable to hydrogen, and with which the container (1) and its filling are dimensioned and designed such that the container (1) is deformed by the expansion of the metal hydride (6) on filling.

2. A hydrogen storage device according to claim 1, with which the cassettes (5) are filled with metal hydride cast blocks (6) which decompose completely into powder by way of the charging with hydrogen

3. A hydrogen storage device according to one of the preceding claims, with which the container (1) in the activated condition with metal hydride (6) has a density of more than 4 g/cm³.

4. The use of a hydrogen storage device according to one of the preceding claims, for a vessel, in particular for a submarine.

5. A method for manufacturing a hydrogen storage device, with which a steel container (2) is filled with at least one metal hydride block (6) and subsequently closed into a container (1), thereafter is evacuated and then filled with hydrogen.

6. A method according to claim 5, with which the metal hydride blocks (6) as essentially unmachined cast blocks (6) are inserted in the steel container (2), as the case may be, amid the intermediate arrangement of a cassette (5), which is permeable to hydrogen.

7. A method according to one of the preceding claims, with which the activation of the metal hydride (6) is effected without heating and flushing.

8. A method according to one of the preceding claims, with which the activation of the metal hydride is effected by way of filling with hydrogen at a temperature between 5°C and 45°C and at a pressure of between 10 bar and 65 bar.

9. A method according to one of the preceding claims, with which a metal hydride block (6) is arranged in a metal cassette (5), which is designed permeable to hydrogen, and several cassettes filled in such a manner are incorporated into the steel container (2).

10. A method according to one of the preceding claims, with which the steel container (2) is essentially filled completely with metal hydride blocks (6), and cassettes (5), which are present as the case may be.

11. A method according to one of the preceding claims, with which each cassette (5) before introduction into the steel container (2) is closed by a cover, which is preferably formed by the base of the next cassette (5).

12. A method according to one of the preceding claims, with which each cassette (5) is closed by welding.

13. A method according to one of the preceding claims, with which the cassettes (5) are welded to one another before introduction into the steel container (2).

## Revendications

1. Réservoir d'hydrogène composé d'un réservoir étanche à la pression (1) rempli d'hydrure métallique (6), comprenant un tuyau de remplissage et de purge (4), dans lequel le réservoir (1) est rempli d'un hydrure métallique (6) stocké dans des cassettes (5) de conception perméable à l'hydrogène, et dans lequel le réservoir (1) et son contenu sont dimensionnés et disposés de façon telle que le réservoir (1) au moment du remplissage subit une déformation plastique par dilatation de l'hydrure métallique (6).

2. Réservoir d'hydrogène selon la revendication 1, dans lequel les cassettes (5) sont remplies de lingots d'hydrure métallique (6) qui se désagrègent entièrement en poudre au moment du chargement de l'hydrogène.

3. Réservoir d'hydrogène selon l'une des revendications précédentes, dans lequel le réservoir (1) lorsqu'il est activé avec de l'hydrure métallique (6) présente une densité supérieure à 4 g/cm³.

4. Utilisation d'un réservoir d'hydrogène selon l'une des revendications précédentes pour un bateau, en particulier un sous-marin.

5. Procédé de préparation d'un réservoir d'hydrogène, dans lequel un réservoir en acier (2) est rempli d'au moins un bloc d'hydrure métallique (6) puis est raccordé à un réservoir (1), ensuite est purgé et enfin rempli d'hydrogène.

6. Procédé selon la revendication 5, dans lequel les blocs d'hydrure métallique (6) sont insérés dans le réservoir en acier (2) sous forme de lingots sensiblement bruts (6), en interposant éventuellement une cassette perméable à l'hydrogène (5).

7. Procédé selon l'une des revendications précédentes, dans lequel l'activation de l'hydrure métallique (6) est réalisée sans chauffage ni balayage.

8. Procédé selon l'une des revendications précédentes, dans lequel l'activation de l'hydrure métallique est réalisée en chargeant de l'hydrogène à une température comprise entre 5 et 45 °C et sous une pression comprise entre 10 et 65 bars.

9. Procédé selon l'une des revendications précédentes, dans lequel on dispose un bloc d'hydrure métallique (6) dans une cassette métallique (5) conçue de façon perméable à l'hydrogène, et on insère plusieurs cassettes remplies de la sorte dans le réservoir en acier (2).

10. Procédé selon l'une des revendications précédentes, dans lequel le réservoir en acier (2) est pour l'essentiel complètement rempli de blocs d'hydrure métallique (6) et le cas échéant des cassettes (5) présentes.

11. Procédé selon l'une des revendications précédentes, dans lequel chaque cassette (5), avant d'être introduite dans le réservoir en acier (2), est fermée à l'aide d'un couvercle formé de préférence par le dessous de la cassette (5) suivante.

12. Procédé selon l'une des revendications précédentes, dans lequel chaque cassette (5) est fermée à l'aide d'une soudure.

13. Procédé selon l'une des revendications précédentes, dans lequel les cassettes (5), avant d'être introduites dans le réservoir en acier (2), sont soudées les unes aux autres.
